# EUROPÄISCHE PATENTSCHRIFT

(11) **EP 0 970 314 B1**
(45) Veröffentlichungstag und Bekanntmachung des Hinweises auf die Patenterteilung: **02.05.2002**
(21) Anmeldenummer: 98910584.6
(22) Anmeldetag: 03.02.1998
(51) Int. Cl.: F16C 11/06

(54) **KUGELGELENKANORDNUNG**
BALL JOINT ARRANGEMENT
ENSEMBLE DE JOINTS A ROTULE

(30) Priorität: 17.03.1997 DE 29704732 U
(43) Veröffentlichungstag der Anmeldung: 12.01.2000
(73) Patentinhaber: Sachsenring Automobiltechnik AG, 08058 Zwickau (DE)
(72) Erfinder: RABE, Jürgen, D-91315 Höchstadt (DE)
(74) Vertreter: Hufnagel, Walter, Dipl.-Ing., Dipl.-Wirtsch.-Ing.
(86) Internationale Anmeldenummer: DE9800309
(87) Internationale Veröffentlichungsnummer: WO9841772

(56) Entgegenhaltungen:
- EP-A- 0 027 770
- DE-A- 1 525 118
- FR-A- 1 396 331
- FR-A- 2 395 161
- FR-A- 2 692 948
- GB-A- 1 121 004
- US-A- 4 747 203
- US-A- 4 887 486
- US-A- 5 352 059

## Beschreibung

Die vorliegende Erfindung bezieht sich auf eine Kugelgelenkanordnung gemäß dem Oberbegriff des Anspruchs 1.

Eine derartige Kugelgelenkanordnung ist aus der FR-A-2 395 161 bekannt. Dort ist an den Stegenden eines Y-förmigen Blechprägeteils je eine halbkugelförmige Vertiefung eingedrückt. In jede Vertiefung ist eine Lagerschale und eine in dieser rotationsbeweglich gelagerte Kugel eingesetzt. Anschließend ist ein ebenfalls Y-förmig geprägter Deckelteil auf das Blechprägeteil aufgebracht und mit diesem fest verbunden. Der Deckelteil besitzt an den Stellen der Vertiefungen des Blechprägeteils Öffnungen für den Durchtritt der Kugelzapfen. Bei dieser Konstruktion müssen das Blechprägeteil und der Deckelteil genau aneinander angepaßt sein, damit die Öffnungen und Vertiefungen genau übereinstimmen. Dies ist die Voraussetzung für eine einwandfreie Funktion dieses Mehrfach-Kugelgelenks.

Bei einer anderen Art einer Kugelgelenkanordnung mit zwei Kugelgelenken, beispielsweise für die Automobiltechnik, besteht diese aus geschmiedetem Leichtmetall. In den Kugelgelenkgehäusen ist jeweils eine Aussparung für die Kugel und ein Kunststofflagerteil vorgesehen. Nach dem Durchstecken des Kugelzapfens mit dem auf der Kugel befindlichen Kunststofflagerteil durch eine Gehäuseöffnung und dem Einsetzen derselben in die Aussparung wird eine Dichtungsscheibe auf die Kugel gelegt und dadurch die Gehäuseöffnung geschlossen. Die Dichtungsscheibe und die Kugel werden dadurch festgelegt, daß ein über die Dichtungsscheibe überstehender Rand des Kugelgelenkgehäuses umgebördelt wird.

Mit der vorliegenden Erfindung soll die Aufgabe gelöst werden, eine Kugelgelenkanordnung der eingangs genannten Art rationell und kostengünstig herstellen zu können.

Gelöst wird diese Aufgabe durch die im Anspruch 1 angegebenen Merkmale.

Durch die erfindungsgemäße Verwendung von Abschnitten eines Strangpreßprofils für die Kugelgelenkgehäuse und die diese verbindenden Stege sowie die rohrförmige Gestaltung des Hohlraums für den Einsatz der Kugel und das Gehäusematerial erfolgt die Herstellung besonders rationell.

Weitere vorteilhafte Einzelheiten der Erfindung sind in den Unteransprüchen angegeben und werden nachfolgend anhand der in der Zeichnung veranschaulichten Ausführungsbeispiele näher beschrieben. Es zeigen:
- Fig. 1: eine perspektivische Ansicht einer erfindungsgemäßen Kugelgelenkanordnung,
- Fig. 2: eine Ansicht einer Kugelgelenkanordnung von unten gemäß dem Schnitt I-I der Fig. 1. die
- Fig. 3 bis 7: mögliche Ausführungsformen eines Strangpreßprofils.

In der Zeichnung ist mit 1 eine Kugelgelenkanordnung mit mehreren Kugelgelenkgehäusen 1.1 gezeigt. Jedes Kugelgelenkgehäuse 1.1 besteht aus einem Gehäuseteil 2 mit einem seinen inneren Hohlraum 2.1.ausfüllenden polymeren Gehäusematerial 3. Der Hohlraum 2.1 ist mit dem Gehäusematerial 3 ausgegossen oder ausgespritzt. Im Kugelgelenkgehäuse 1.1 wird beim Eingießen oder Einspritzen des Gehäusematerials 3 eine Kugel 4 in einer Aussparung 5 des Gehäusematerials 3 derart eingebettet, daß der an der Kugel 4 angebrachte Kugelzapfen 6 aus dem Gehäusematerial 3 nach außen absteht. Die Kugel 4 ist so eingebettet, daß sie in an sich bekannter Weise rotationsbeweglich ist.

Die Gehäuseteile 2 sind durch Stege 2.10 miteinander verbunden und sie bestehen vorzugsweise aus einem Abschnitt 10.1 eines Strangpreßteils 10 aus gegossenem, gezogenem oder extrudiertem Material aus Kunststoff oder Metall. Bei der Herstellung aus Metall wird vorteilhaft Aluminium, Magnesium, Stahl, rostfreier Stahl, Titan oder dgl. verwendet. Wird Kunststoff verwendet, so kann dieser unverstärkt oder mit Zusätzen, beispielsweise in Form von Fasern und/oder Partikeln, verstärkt sein. Bevorzugt kommen Thermoplaste oder Duroplaste zur Anwendung. Beispielsweise besteht der Strangpreßteil 10 aus einem oder mehreren der Kunststoffe Polyamid, Polyimid, Polyethylen, Polyurethan, Polyepoxid, Polyester oder dgl..

Als Gehäusematerial 3 wird ebenfalls bevorzugt ein geeigneter Kunststoff auf der Basis eines Thermoplasts oder Duroplasts, beispielsweise Polyamid, Polyimid, Polyurethan, Polyethylen, Polypropylen oder dgl. verwendet.

Der oder die Stege 2.10 besitzen bevorzugt zur Gewichtseinsparung wenigstens eine Aussparung 2.10.1 und gegebenenfalls wenigstens einen Versteifungssteg 2.10.2.

Die Gehäuseteile 2 und die Stege 2.10 sind durch Abschnitte 10.1 eines Strangpreßteils 10 gebildet, so daß die Gehäuseteile 2 an beiden Stirnseiten 2.21 und 2.22 offen und somit rohrförmig ausgebildet sind.

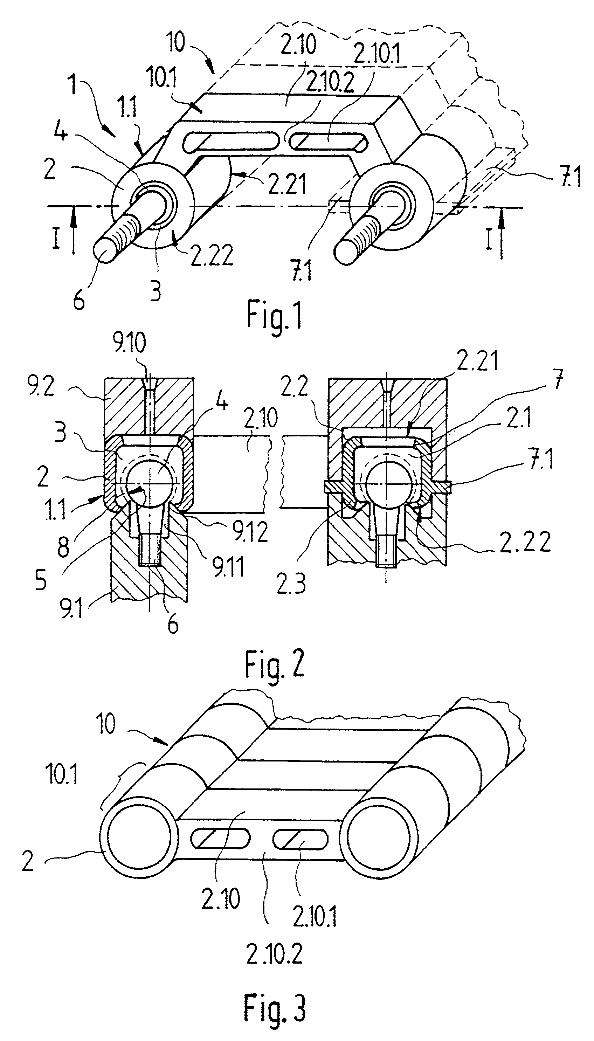

Die Gehäuseteile 2 besitzen Verankerungselemente 7, die - wie Fig. 2 zeigt - im Bereich der Randabschnitte 2.2 und 2.3 vorgesehen und nach innen umgebogen sind. Dies geschieht beispielsweise durch Umbördeln oder Stauchen.

Vorzugsweise können die Verankerungselemente 7 zugleich beim Extrudieren des Strangpreßprofils in Form von Stegen oder Flügeln erzeugt werden.

Versteifungselemente 7.1 verlaufen in Längsrichtung des Stranges.

Die Verankerungselemente 7 und/oder die Versteifungselemente 7.1 können innen und/oder außen am Gehäuseteil 2 angeformt sein. Dies ist anhand der Fig. 1 und 2 dargestellt. Äußere Versteifungselemente 7.1 können auch als Anschraubflächen ausgebildet sein oder dafür verwendet werden.

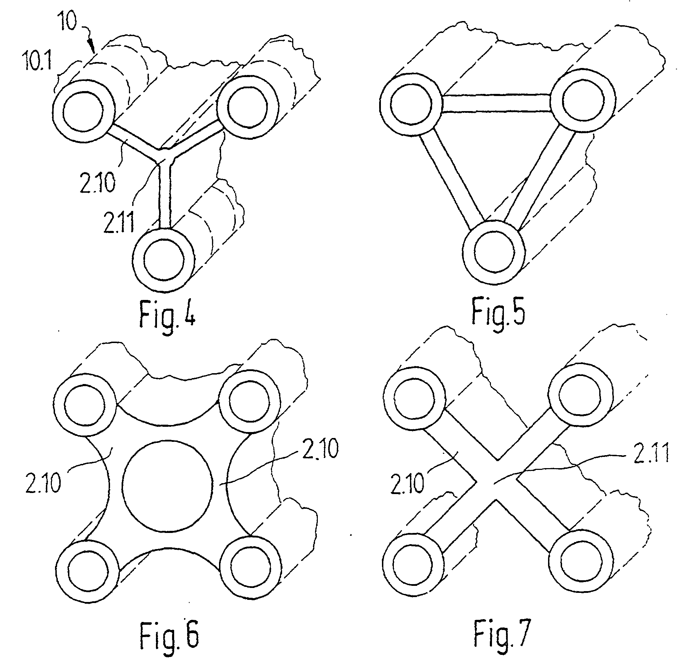

Der Profilquerschnitt eines Strangpreßteils 10 kann beispielsweise gemäß den in den Fig. 3 bis 7 schematisch dargestellten Querschnitten ausgebildet sein. Die Stege 2.10 können gemäß den Fig. 4 und 7 in einem Kreuzungspunkt 2.11 zusammenlaufen oder sie sind, gegebenenfalls zusätzlich, von einem Gehäuseteil 2 zum unmittelbar benachbarten Gehäuseteil 2 vorgesehen, wie die Fig. 3, 5 und 6 zeigen.

Die Verankerungselemente 7 können in Form von nach innen oder nach außen weisenden Vorsprüngen ausgebildet sein. Beispielsweise können sie in Form von Erhöhungen, Buckeln, Spitzen oder dgl. in das Wandmaterial eingedrückt sein.

Gemäß dem in Fig. 2 im abgebildeten linken Gehäuseteil 2 dargestellten Ausführungsbeispiel kann zwischen dem Gehäusematerial 3 und der Kugel 4 eine diese zumindest im Bereich der Aussparung 5 umgebende, gestrichelt angedeutete Lager-Zwischenschicht 8 vorgesehen sein. Diese besteht vorzugsweise aus einem Material mit einem geringen Reibungskoeffizienten. Bei Verwendung eines Kunststoffs aus Thermoplast oder Duroplast besteht dieses Material vorzugsweise aus Polyamid, Polyimid, Polyethylen oder aus einem Fluorkohlenstoff, wie Polytetrafluorethylen, Polytetrafluorpropylen oder dgl..

Die Kugelgelenkgehäuse 1.1 können mit einer Form 9 aus zwei oder mehr Werkzeugteilen hergestellt werden.

Beispielsweise werden sie in einer zweiteiligen Form 9 mit den Werkzeugteilen 9.1 und 9.2 so hergestellt, daß der Kugelzapfen 6 durch eine Öffnung 9.11 des Werkzeugteils 9.1 hindurchgeführt und außerhalb der Form 9 durch Halteelemente gehalten wird. Die Halterung erfolgt so, daß die Kugel 4 bezüglich des Gehäuseteils 2 und entsprechend auch des Werkzeugteils 9.1 in der vorgesehenen Position fixiert ist. Das Werkzeugteil 9.1 besitzt einen Auflagerand 9.12, der an der Kugel 4 über einen Bereich dicht anliegt, der kleiner ist als die Kugel 4. Der Auflagerand 9.12 besitzt also beispielsweise einen Radius, der kleiner ist als der Kugelradius.

Nach dem Aufsetzen der Werkzeugteile 9.1 und 9.2 auf die zugeordneten Randabschnitte 2.2 und 2.3 des Gehäuseteils 2 wird der so gebildete Hohlraum 2.1 über die Einspritzöffnung 9.10 mit dem Gehäusematerial 3 ausgefüllt, indem dieses eingegossen oder eingespritzt wird. Nach dem Erstarren des Gehäusematerials 3 wird die Form 9 geöffnet und die fertige Kugelgelenkanordnung 1 aus der Form 9 ausgestoßen. Von besonderem Vorteil ist, daß gemäß der Erfindung alle Kugelgelenkgehäuse 1.1 in einem einzigen Formprozeß hergestellt werden können, da alle Gehäuseteile 2 gleichzeitig mit dem Gehäusematerial 3 gefüllt werden können.

Bei dem in Fig. 2 rechts abgebildeten Kugelgelenkgehäuse 1.1 ist das Werkzeug 9 derart ausgebildet, daß das Gehäusematerial 3 die Form über die offenen Stirnseiten 2.21 und 2.22 hinaus ausfüllt.

## Patentansprüche

1. Kugelgelenkanordnung mit zwei oder mehr durch einen bzw. je einen Steg (2.10) miteinander verbundenen Kugelgelenken mit je einem Kugelgelenkgehäuse (1.1), das je aus einem mit Verankerungselementen (7) versehenen Gehäuseteil (2) besteht, wobei in deren Hohlräumen (2.1) je eine Kugel (4) eingesetzt ist und der die eingesetzte Kugel (4) jeweils umgebende Freiraum mit einem Gehäusematerial (3) ausgefüllt ist, in welchem die Kugel (4) rotationsbeweglich gelagert ist, wobei ein an der Kugel (4) vorgesehener Kugelzapfen (6) nach außen absteht, und wobei der von jedem Gehäuseteil (2) umschlossene Hohlraum (2.1) größer als der Kugeldurchmesser ist, **dadurch gekennzeichnet, daß** die Gehäuseteile (2) mit den Stegen (2.10) aus einem Abschnitt (10.1) eines Strangpreßteils bestehen, wobei die Gehäuseteile (2) jeweils rohrförmig ausgebildet und an beiden Stirnseiten offen sind.

2. Kugelgelenkanordnung nach Anspruch 1, **dadurch gekennzeichnet, daß** die Kugeln (4) jeweils in einer zwischen dem Gehäusematerial (3) und den Kugeln (4) vorgesehenen Lageroder Zwischenschicht (8) rotationsbeweglich gelagert sind.

3. Kugelgelenkanordnung nach Anspruch 1 oder 2, **dadurch gekennzeichnet, daß** ein Steg (2.10) oder wenigstens einer der Stege (2.10) mindestens eine Aussparung (2.10.1) besitzt bzw. besitzen.

4. Kugelgelenkanordnung nach Anspruch 3, **dadurch gekennzeichnet, daß** eine Aussparung (2.10.1) wenigstens einen Versteifungssteg (2.10.2) aufweist oder ein derartiger Versteifungssteg (2.10.2) zwischen zwei Aussparungen (2.10.1) vorgesehen ist.

5. Kugelgelenkanordnung nach einem der Ansprüche 1 bis 4, **dadurch gekennzeichnet, daß** das Gehäusematerial (3) jeweils das Gehäuseteil (2) an wenigstens einer der offenen Stirnseiten (2.21; 2.22) überragt.

6. Kugelgelenkanordnung nach einem der Ansprüche 1 bis 5, **dadurch gekennzeichnet, daß** die Gehäuseteile (2) durch in einem Kreuzungspunkt (2.11) zusammenlaufende Stege (2.10) miteinander verbunden sind.

7. Kugelgelenkanordnung nach einem der Ansprüche 1 bis 6, **dadurch gekennzeichnet, daß** jeweils einander unmittelbar benachbarte Gehäuseteile (2) durch wenigstens einen Steg (2.10) miteinander verbunden sind (Fig. 3, 5 und 6)

8. Kugelgelenkanordnung nach einem der Ansprüche 1 bis 7, **dadurch gekennzeichnet, daß** die Gehäuseteile (2) mit den Stegen (2.10) aus einem der Materialien Metall, Kunststoff oder mit Fasern verstärkter Kunststoff bestehen.

## Claims

1. Ball joint arrangement with two or more ball joints which are joined together by a web (2.10) or a web each and each have a ball joint housing (1.1) which in each case consists of a housing part (2) provided with anchoring elements (7), whereby a ball (4) is inserted in each of their cavities (2.1) and the free space surrounding the inserted ball (4) is in each case filled with a housing material (3) in which the ball (4) is mounted so that it can move in rotation, whereby a ball pin (6) provided on the ball (4) protrudes outwards, and whereby the cavity (2.1) enclosed by each housing part (2) is greater than the ball diameter, **characterised in that** the housing parts (2) with the webs (2.10) consist of a portion (10.1) of an extrusion, whereby the housing parts (2) are in each case tubular in shape and open at both ends.

2. Ball joint arrangement according to claim 1, **characterised in that** in each case the balls (4) are mounted so that they can move in rotation in a bearing or intermediate layer (8) provided between the housing material (3) and the balls (4).

3. Ball joint arrangement according to claim 1 or 2, **characterised in that** one web (2.10) or at least one of the webs (2.10) has at least one recess (2.10.1).

4. Ball joint arrangement according to claim 3, **characterised in that** one recess (2.10.1) exhibits at least one stiffening web (2.10.2) or one such stiffening web (2.10.2) is provided between two recesses (2.10.1).

5. Ball joint arrangement according to one of claims 1 to 4, **characterised in that** in each case the housing material (3) projects beyond the housing part (2) at least at one of the open ends (2.21; 2.22).

6. Ball joint arrangement according to one of claims 1 to 5, **characterised in that** the housing parts (2) are joined to one another by webs (2.10) running together at an intersection point (2.11).

7. Ball joint arrangement according to one of claims 1 to 6, **characterised in that** in each case housing parts (2) directly adjacent to one another are joined to one another by at least one web (2.10) (figs. 3, 5 and 6).

8. Ball joint arrangement according to one of claims 1 to 7, **characterised in that** the housing parts (2) with the webs (2.10) are made of one of the materials metal, plastic or fibre-reinforced plastic.

## Revendications

1. Ensemble de joint à rotule avec deux ou plusieurs joints à rotule reliés l'un à l'autre, respectivement par une traverse (2.10) avec respectivement un carter de joint (1.1), composé d'une partie de carter (2) munie d'éléments d'ancrage (7) et d'espaces creux (2.1) dans lesquels est montée une rotule (4), et dont l'espace laissé libre par la rotule (4) et entourant celle-ci, est rempli par un matériau-enveloppe (3), dans lequel la rotule (4) est montée, en rotation possible, un bout d'arbre (6) s'étendant vers l'extérieur étant fixé à cette rotule (4), l'espace libre (2.1) entouré par chacune des parties de carter (2) étant plus grand que le diamètre de la rotule,
**caractérisé en ce que**
les parties de carter (2) ainsi que les traverses (2.10) consistent en une pièce (10.1) extrudée, les parties de carter (2) étant chacune de forme tubulaire et ouvertes à leurs deux faces frontales.

2. Ensemble de joints à rotule suivant la revendication 1,
**caractérisé en ce que**
les rotules (4) sont montées en rotation possible à l'intérieur d'une couche support ou intermédiaire (8) située entre le matériau-enveloppe (3) et les rotules (4).

3. Ensemble de joints à rotule suivant la revendication 1 ou 2,
**caractérisé en ce qu'**
une traverse (2.10) ou au moins une des traverses (2.10) comporte au moins une ouverture (2.10.1).

4. Ensemble de joints à rotule suivant la revendication 3,
**caractérisé en ce qu'**
une ouverture (2.10.1) comporte au moins une traverse de renfort (2.10.2), ou une traverse de renfort (2.10.2) est prévue entre deux ouvertures (2.10.1).

5. Ensemble de joints à rotule suivant lune des revendications 1 à 4,
**caractérisé en ce que**
le matériau-enveloppe (3) dépasse de chacune des parties de carter (2) au moins de l'une des faces frontales ouvertes (2.21, 2.22).

6. Ensemble de joints à rotule suivant l'une des revendications 1 à 5,
**caractérisé en ce que**
les parties de carter (2) sont réunies entre elles par des traverses (2.10) se rejoignant par un point de croisement (2.11).

7. Ensemble de joints à rotule suivant l'une des revendications 1 à 6,
**caractérisé en ce que**
deux parties de carter (2) directement voisines sont reliées par au moins une traverse (fig. 3, 5 et 6).

8. Ensemble de joints à rotule suivant l'une des revendications 1 à 7,
**caractérisé en ce que**
les parties du carter (2) avec les traverses (2.10) sont en métal, en plastique ou en plastique renforcé de fibres.
